Europäisches Patentamt

European Patent Office

Office européen des brevets

(19)

(11) Veröffentlichungsnummer: **0 286 800**
**B1**

(12) **EUROPÄISCHE PATENTSCHRIFT**

(45) Veröffentlichungstag der Patentschrift:
**18.04.90**

(51) Int. Cl.⁴: **F02K 1/82, B64D 33/04**

(21) Anmeldenummer: **88102280.0**

(22) Anmeldetag: **16.02.88**

(54) **Einrichtung zur Infrarotstrahlungsabschirmung.**

(30) Priorität: **11.04.87 DE 3712328**

(43) Veröffentlichungstag der Anmeldung:
**19.10.88 Patentblatt 88/42**

(45) Bekanntmachung des Hinweises auf die Patenterteilung:
**18.04.90 Patentblatt 90/16**

(84) Benannte Vertragsstaaten:
**DE FR GB SE**

(56) Entgegenhaltungen:
**GB-A- 2 034 414**
**US-A- 3 981 448**
**US-A- 3 990 530**
**US-A- 4 099 375**

(73) Patentinhaber: **Messerschmitt-Bölkow-Blohm Gesellschaft mit beschränkter Haftung, Robert-Koch-Strasse, D-8012 Ottobrunn(DE)**

(72) Erfinder: **Müller, Werner, Haus 25, D-8018 Pullenhofen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Einrichtung zur Strahlungsabschirmung eines heißen Triebwerks-Gasauslasses gegen IR-Detektierung gemäß dem Gattungsbegriff des Anspruchs 1.

Solche Einrichtungen sind bereits in verschiedenen Ausführungsformen bekannt geworden. So offenbart die US-PS 3 970 252 eine Kühleinrichtung für ein Turbotriebwerk, die so gestaltet und angeordnet ist, daß sie den direkten Blick auf die Heißgas-Auslaßdüse versperrt und damit die Infrarotdetektion erschwert. Diese Einrichtung ist ein birnenförmiges Gehäuse, das direkt am Gasauslaß angeordnet ist und das Heißgas kühlt, wobei der Innenraum der Birne so ausgestaltet ist, daß die von außen einströmende Kaltluft durch Schlitze in den Abgaskanal geleitet wird und dort das heiße Gas kühlt. Zwar wird hier ebenfalls der Blick auf infrarotstrahlende Teile verdeckt, jedoch ist der fertigungstechnische Aufwand sehr hoch und außerdem würde eine solche Ausführungsform bei Hochleistungsflugzeugen im Machbereich erheblich die Leistung durch die in der Birne auftretenden hohen Staudrücke beeinträchtigen.

Eine weitere Ausführungsform zur Abschirmung gegen IR-Detektion ist aus der DE-OS 3 127 106 bekannt geworden, bei der der direkte Blick auf die Auslaßfläche des Heißgases durch ein gasleitendes Element versperrt wird. Dieses Element nimmt das heiße Gas auf, leitet es aus seiner Strömungsrichtung ineinem bestimmten Winkel unter gleichzeitiger Kühlung um und gibt das Abgas gekühlt nahezu quer zur Flugrichtung an die Atmosphäre ab. Auch diese Einrichtung ist für Hochleistungsflugzeuge nicht geeignet, da sie deren Leistung und insbesondere durch den in einem Winkel ausströmenden Abgasstrom die Flugsteuerung beeinträchtigt.

Aus der britischen Patentanmeldung 2 034 414 ist eine weitere Ausführungsform bekanntgeworden, bei der sowohl im Gasdüsen-Auslaß als auch in einem Gasführungsring Querstrom-Kühlanordnungen angeordnet sind, die zwar auch den direkten Einblick in den heißen Düsenkanal verwehren, aber in ihrer Konstruktion äußerst aufwendig sind und die Flugzeugleistung beeinträchtigen.

Der vorliegenden Erfindung liegt die Aufgabe zugrunde, eine Einrichtung der eingangs genannten Art zu schaffen, die ohne große Beeinträchtigung der Abgasströmung und der Flugzeugleistung eine Infrarotdetektion weitgehend verhindert.

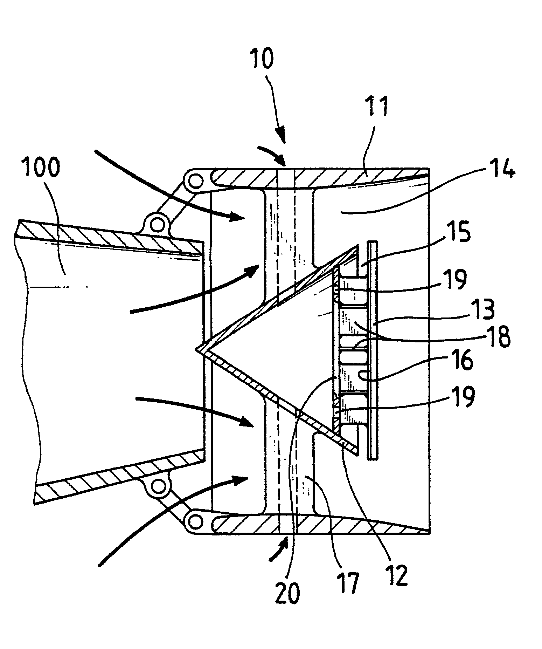

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert und in der Figur der Zeichnung skizziert.

Das in der Figur der Zeichnung dargestellte Ausführungsbeispiel zeigt in einem Längsquerschnitt die am Triebwerks-Gasauslaß angeordnete Einrichtung zur Infrarotabschirmung. Hierbei ist an der Gasauslaßdüse 100 an geeigneter Stelle und in geeigneter Form ein Gasführungsring 11 befestigt. Dies richtet sich sowohl nach dem Flugzeugtyp, als auch nach der Triebwerkskonstruktion, beispielsweise danach, ob der Gasauslaßquerschnitt veränderbar ist, denn auch hierfür ist die Erfindung anwendbar. Dieser Gasführungsring 11 ist in seinem Innendurchmesser so groß gewählt, daß zwischen ihm und dem Gasdüsenaußendurchmesser ein ausreichend dimensionierter Kühlluftströmungskanal 14 gebildet wird. Im Zentrum dieses Gasführungsringes 11 ist an drei oder vier Streben 17 eine sogenannte Kernstruktur 12 angeordnet, die zur Gasauslaßdüse hin konisch spitz zuläuft und in ihrem größten Flächenquerschnitt demjenigen der Gasaustrittsfläche der Triebwerksdüse entspricht oder um einen bestimmten kleinen Betrag größer ist als letzterer. Diese Kegelendfläche der Kernstruktur 12 wird mit einer Abdeckplatte 13 versehen und zwar schließt diese nicht dicht mit der Mantelfläche der konischen Kernstruktur ab, sondern ist - wie aus der Zeichnungsskizze ersichtlich - in einem bestimmten Abstand mittels Streben 18 an einer mit Luftdurchlaßbohrungen 19 versehenen Kegelversteifungsplatte 20 so befestigt, daß sie einen Luftspalt 15 bildet. Weiterhin ist diese Abdeckplatte 13 an ihrer zum Innenraum der Kernstruktur 12 gerichteten Fläche mit einer Wärmeisolationsschicht versehen. Die gesamte Kernstruktur 12 mit der Abdeckplatte 13 und dem Gasführungsring 11 ist aus CFC - Kohlenstoffaser die mit Kohlenstoff gebunden ist gefertigt. Dadurch wird - ganz im Gegensatz zum Stand der Technik - nicht nur eine sehr hohe Wärmeverträglichkeit der vorgeschlagenen Einrichtung erreicht, denn dieses Material weist eine Hitzebeständigkeit von über 2000°C auf, sondern auch eine wesentliche Gewichtserleichterung und damit eine erheblich geringere Leistungsbeeinträchtigung des Flugzeugs erzielt.

Die so ausgebildete Einrichtung verhindert mit der vorbeschriebenen Kernstruktur 12 den Einblick durch IR-Sensoren in die durch die Triebwerkstemperatur zum Glühen gebrachte Brennkammer. Der Außenring 11 der vorgeschlagenen Einrichtung 10 ist so ausgestaltet und dimensioniert, daß Kühlluft aus der Anströmung angezogen wird und damit eine Ejektorwirkung erzielt wird. Aus der nunmehr gegen direkte Sicht abgedeckten Triebwerks-Gasauslaß 100 tritt das heiße Abgas aus und in den Gasführungsring 11 ein, dort wird der Heißgasstrom durch die Kernstruktur geteilt und an die Innenwandfläche der Gasführungsfläche geleitet, dort mit dem einströmenden Kühlluftstrom im düsenartig verengten Kühlluftkanal 14 vermischt und mit erhöhter Geschwindigkeit an die Atmosphäre gekühlt abgegeben. Durch das Heißgas wird die Kernstruktur automatisch erwärmt, so daß sich in deren Innenraum ein Hitzepotential bildet. Um diesem nun ein Einströmen in den in der Einrichtung 10 abgekühlten Abgasstrahl zu ermöglichen, ist die Abdeckplatte 13 der Kernstruktur 12 mit einem einen Luftspalt 15 bildenden Abstand von dem konischen Mantel der Kernstruktur 12 angeordnet. Durch diesen Luftspalt kann nun das gebildete Wärmepotential ausströmen, das durch den Sog der Hauptströmung in den Gasführungsring 11 und damit in den dort gebildeten Kühlluftkanal 14 gezogen wird. Durch diese Ausbildung und die gewählte Materialart sind die bisher beim Stand der Technik erforderlichen gesonderten Kühlanordnungen für sogenannte Abdeckeinrichtungen gegen IR-Detektion nicht mehr erforderlich.

**Patentansprüche**

1. Einrichtung zur Strahlungsabschirmung eines heißen Triebwerks-Gasauslasses gegen IR-Detektion mittels einer Kernstruktur, die von einem Gasführungsring ummantelt ist, dessen Innendurchmesser größer als der Gasdüsenaußendurchmesser ist und so ein Kühlluftkanal mit Ejektorwirkung gebildet wird, dadurch gekennzeichnet, daß die von dem Gasführungsring (11) ummantelte konische Kernstruktur (12) mit einer in Gasauslaßrichtung angeordneten Abdeckplatte (13) versehen ist, wobei der maximale Außendurchmesser der Kernstruktur (12) und der Abdeckplatte (13) gleich oder etwas größer als der Innendurchmesser des Triebwerks-Gasauslasses (100) ist und die Kernstruktur (12) mit ihrer Abdeckplatte (13) aus CFC-Material (Kohlenstoff-Faser mit Kohlenstoff gebunden) oder ähnlichem hitzbeständigen Fasermaterial gebildet ist.

2. Einrichtung nach Anspruch 1, dadurch gekennzeichnet, daß zwischen der konischen Kernstruktur (12) und der Abdeckplatte (13) zur Temperaturisolierung ein Spalt (15) angeordnet ist.

3. Einrichtung nach Anspruch 1 oder 2, dadurch gekennzeichnet, daß die Abdeckplatte (13) zusätzlich mit einer Temperatur-Isolierschicht (16) versehen ist.

4. Einrichtung nach den Ansprüchen 1 bis 3, dadurch gekennzeichnet, daß die Kernstruktur mittels drei oder vier Streben (17) aus CFC-Material am Gasführungsring (11) befestigt ist.

5. Einrichtung nach den Ansprüchen 1 bis 4, dadurch gekennzeichnet, daß die Abdeckplatte (13) mittels Abstandsstreben (18) an der Kernstruktur (12) befestigt ist.

**Claims**

1. Device for radiation shielding of a hot engine-gas outlet against IR detection by means of a core structure which is embraced by a gas-ducting ring the inside diameter of which is bigger than the gas-jet outside diameter, thus creating an ejection-effective cool-air channel, characterised in that the conical core structure (12), embraced by the gas-ducting ring (11), is provided with a cover plate (13) disposed in the gas-outlet direction, whereby the maximum outside diameter of the core structure (12) and the cover plate (13) is equal to or slightly larger than the inside diameter of the engine-gas outlet (100), and the core structure (12) including its cover plate (13) is made of CFC material (carbon-bound carbon fibre) or similar heat-resistant fibre material.

2. Device according to claim 1, characterised in that a gap (15) is disposed between the conical core structure (12) and the cover plate (13) for the purpose of temperature isolation.

3. Device according to claim 1 or 2, characterised in that the cover plate (13) is additionally provided with a temperature-isolating layer (16).

4. Device according to one of the claims 1 to 3, characterised in that the core structure is mounted onto the gas-ducting ring (11) by means of three or four bridges (17) of CFC material.

5. Device according to claims 1 to 4, characterised in that the cover plate (13) is mounted onto the core structure (12) by means of distance struts (18).

**Revendications**

1. Dispositif de protection de la sortie de gaz chaude d'un réacteur contre la détection par infrarouge, à l'aide d'une structure de noyau entourée d'une bague de guidage de gaz dont le diamètre intérieur est supérieur au diamètre extérieur de la tuyère de gaz et qui forme ainsi un canal d'air de refroidissement à effet d'éjecteur, caractérisé en ce que la structure de noyau conique (12) entourée par la bague de guidage de gaz (11) est pourvue d'une plaque de recouvrement (13) dans la direction de sortie des gaz, le diamètre extérieur maximal.de la structure de noyau (12) et de la plaque de recouvrement (13) étant égal ou un peu plus grand que le diamètre intérieur de la sortie de gaz (100) du réacteur et la structure de noyau (12) avec sa plaque de recouvrement (13) étant constituée en matériau CFC (fibres de carbone liées par du carbone) ou en un matériau fibreux analogue résistant à la chaleur.

2. Dispositif selon la revendication 1, caractérisé en ce qu'un interstice (15) est ménagé entre la structure de noyau conique (12) et la plaque de recouvrement (13), en vue de constituer une isolation thermique.

3. Dispositif selon les revendications 1 et 2, caractérisé en ce que la plaque de recouvrement (13) est de plus pourvue d'une couche d'isolation thermique (16).

4. Dispositif selon les revendications 1 à 3, caractérisé en ce que la structure de noyau est fixée sur la bague de guidage de gaz (11) au moyen de trois ou quatres entretoises (17) en matériau CGC.

5. Dispositif selon les revendications 1 à 4, caractérisé en ce que la plaque de recouvrement (13) est fixée sur la structure de noyau (12) au moyen d'entretoises d'espacement (18).